# EUROPEAN PATENT APPLICATION

(11) **EP 1 978 139 A1**
(43) Date of publication of application: **08.10.2008**
(21) Application number: 06797345.3
(22) Date of filing: 04.09.2006
(51) Int. Cl.: D04H 1/40, A47L 13/16, B32B 5/26, D06M 13/207, D06M 101/06

(54) **NONWOVEN FABRIC SHEET HAVING CLEANING ABILITY**

(30) Priority: 24.01.2006 JP 2006014916
(71) Applicant: Kinsei Seishi Co., Ltd., Kochi-shi, Kochi 780-0921 (JP)
(72) Inventor: YASUMITSU, Yasuji c/o KINSEI SEISHI CO., LTD., Kochi 7800921 (JP); MATSUMOTO, Akira c/o KINSEI SEISHI CO., LTD., Kochi 7800921 (JP); CHIKAMORI, Kazuyuki c/o KINSEI SEISHI CO., LTD., Kochi 7800921 (JP); YAMAZAKI, Yasuyuki c/o KINSEI SEISHI CO., LTD., Kochi 7800921 (JP)
(74) Representative: Henkel, Feiler & Hänzel
(86) International application number: PCT/JP2006/317420
(87) International publication number: WO 2007/086162

(57) **Abstract**

A nonwoven fabric sheet having a cleaning function having a total basis weight of 40 to 1,500 g/m² in which a web layer (ii) having a basis weight of 10 to 400 g/m² produced by an air-laid process, which comprises 20 to 100% by weight of heat-adhesive fibers (a) having a fineness of 1 to 4.4 dtex and 80 to 0% by weight of cellulosic pulp (b) (with the proviso that (a)+(b)=100% by weight) as main components, is laminated on a web layer (i) having a basis weight of 10 to 250 g/m² produced by an air-laid process, which comprises heat-adhesive fibers having a fineness of 1.5 to 50 dtex as a main component; the same web layer (iii) as the above web layer (i) is further laminated on the web layer (ii) as needed to form an integrated sheet as a whole by thermal bonding of these heat-adhesive fibers; and an additive (c) comprising an alkaline inorganic salt powder (c1) having a cleaning function or a hydroxyl group-containing powdery organic acid (c2) having a melting point of 70°C or higher is contained in an amount of 5 to 300 g/m² to at least one portion of between the layer (i) and the layer (ii), inside of the layer (ii), and between the layer (ii) and the layer (iii).

## Description

### Technical Field

The present invention relates to a nonwoven fabric sheet having a cleaning function, and more particularly to a nonwoven fabric sheet which is safe to human and the global environment, because a non-surfactant inorganic salt or organic acid is used as a cleaning agent, and has a practically sufficient cleaning function.

### Background Art

When living rooms, kitchens, floors of bathrooms and toilets, further, sinks, cooking ranges, grills, toilet instruments, ventilating fans and the like are cleaned, the cleaning has hitherto been done using cleaning sheets (such as floor cloths and sponges) allowed to contain water, to which solid cleaning agents or liquid cleaning agents are attached, in many cases. However, in the case of using such conventional cleaning sheets, there has been a disadvantage that the cleaning agents must be attached for each time, so that a cleaning sheet has been desired which can be safely used over a long period of time.

For example, patent document 1 (JP-A-11-217354) proposes a surfactant-containing sponge-like molded article obtained by adding a foaming agent to a foam moldable substrate and mixing it therewith, followed by foam molding, in which a surfactant is contained.
However, in such a surfactant-containing sponge, the surfactant is used as a cleaning agent. Accordingly, it is human-unfriendly and also has a problem with regard to the global environment. Further, such a sponge has no problem in cleaning of eating utensils and the like, but has a disadvantage of failing to cope with persistent dirt such as high-viscosity grease around a cooking range or a ventilating fan or dirt burnt and stuck thereto.
Further, patent document 2 (JP-A-2005-66324) proposes a sheet-like cleaning tool for removing dirt of an electromagnetic range, which contains an abrasive such as calcium carbonate having a Mohs hardness of 1 to 4. This discloses only a particulate abrasive, and alkaline or acidic particles and powder of the present invention are neither suggested nor described.

Further, patent document 3 (Japanese patent No. 3,556,415) proposes water-disintegratable paper for cleaning in which nonwoven fabric or paper containing a binder such as hydroxypropylmethylcellulose phthalate is impregnated with a pH buffer solution adjusted to the acidic pH side.
However, such water-disintegratable paper is in a wet state, so that storage for a long period of time causes the occurrence of mold in some cases. As a measure thereto, a fungicide or a bactericide is introduced therein. Accordingly, this is not said to be a human-friendly cleaner.
Further, many of these wet commercial products contain a synthetic surfactant for washing, and therefore are unfriendly to human and environment.
Furthermore, each of these wet commercial products contains water of about twice that of a substrate such as paper or nonwoven fabric, so that the weight is heavy, the transport cost becomes expensive, and further, in order to prevent leakage and drying, a sealing system is required for packaging, resulting in an expensive product.
[Patent Document 1] JP-A-11-217354
[Patent Document 2] JP-A-2005-66324
[Patent Document 3] Japanese patent No. 3,556,415

### Disclosure of the Invention

### Problems That the Invention Is to Solve

An object of the present invention is to provide a nonwoven fabric sheet for cleaning which is excellent in functions of cleaning, wiping and scraping parts where much alkali dirt or soap scum is present of kitchen sinks, cooking ranges, wash-basins, baths, toilets and the like, tatami mats, wooden floors and the like, is light in weight because of its being free from water, does not require a fungicide or a bactericide because of no risk of mold, and is excellent in cleaning performance, compared to conventional wet disintegratable cleaners.

### Means for Solving the Problems

The present invention relates to a nonwoven fabric sheet having a cleaning function having a total basis weight of 40 to 1,500 g/m² in which a web layer (ii) having a basis weight of 10 to 400 g/m² produced by an air-laid process, which comprises 20 to 100% by weight of heat-adhesive fibers (a) having a fineness of 1 to 4.0 dtex and 80 to 0% by weight of cellulosic pulp (b) (with the proviso that (a)+(b)=100% by weight) as main components, is laminated on a web layer (i) having a basis weight of 10 to 250 g/m² produced by an air-laid process, which comprises heat-adhesive fibers having a fineness of 1.5 to 50 dtex as a main component; the same web layer (iii) as the above web layer (i) is further laminated on the web layer (ii) as needed to form an integrated sheet as a whole by thermal bonding of these heat-adhesive fibers; and an additive (c) comprising an alkaline inorganic salt powder (c1) having a cleaning function or a hydroxyl group-containing powdery organic acid (c2) having a melting point of 70°C or higher is contained in an amount of 5 to 300 g/m² to at least one portion of between the layer (i) and the layer (ii), inside of the layer (ii), and between the layer (ii) and the layer (iii).
As the powdery alkaline inorganic salt (c1) having a cleaning function as used herein, preferred is a water-soluble carbonate.
Further, as the hydroxyl group-containing powdery organic acid (c2) having a melting point of 70 °C or higher, preferred is at least one selected from the group consisting of malic acid, citric acid, tartaric acid, gluconolactone and a salt thereof.
Furthermore, polyolefinic synthetic pulp (d) having a multi-branched fibrous structure obtained by a flush process may be allowed to be contained in the web layer (ii) so that the additive (c) /the polyolefinic synthetic pulp (d) (weight ratio) is from 1/0.2 to 1/2.
In addition, the nonwoven fabric sheet having a cleaning function of the present invention is preferably further laminated and integrated with an air-permeable sheet (iv) on one side or both sides thereof, in order to improve handling properties and to play the role of strength reinforcement.
The above-mentioned air-permeable sheets (iv) include a dry nonwoven fabric, a wet nonwoven fabric, paper, a spunbond nonwoven fabric, a melt-blown nonwoven fabric, a plastic net, a perforated film, a split yarn cloth, woven and knitted fabrics and a cheese cloth.

### Advantages of the Invention

In the present invention, when the additive (c) is added to the layer (ii), the air-laid process is employed in forming the web layer (ii) mainly comprising the heat-adhesive fibers (a). Accordingly, the heat-adhesive fibers (a), the cellulosic pulp (b) used as needed and the powder of the additive (c) are entangled. As a result, falling-off of the powder of the additive (c) from the web layer (ii) formed decreases. Further, the combined use of the cellulosic pulp (b) and further, in addition thereto, the polyolefinic synthetic pulp (d) in the web layer (ii) improves water retention properties and improves a cleaning function.
Furthermore, by previously forming the web layer (i) by the air-laid process and laminating the above-mentioned web layer (ii) thereon, the powder of the additive (c) is captured by this web layer (i), even if it falls off from the web layer (ii). Thus, it does not happen to fall off outside the system. Further, the resulting nonwoven fabric sheet is rich in flexibility and excellent in cleaning function.
In addition, in the nonwoven fabric sheet of the present invention in which the web layer (iii) is further laminated as the upper layer, the powder of the additive (c) does not fall off from front-back both surfaces thereof.
Moreover, the nonwoven fabric sheet according to application can be obtained by selecting the fineness of the fiber in the web layer (i) as the substrate sheet or the web layer (iii) as the upper layer, for example, appropriately selecting thick fibers when coarse hard dirt is much and thin fibers when minute or slimy dirt is much.
On the other hand, also when the additive (c) is added to between the layer (i) and the layer (ii) or between the layer (ii) and the layer (iii), the additive (c) is sprayed on each web layer by the air-laid process after the formation of the web layer (i) and before the formation of the web layer (ii) or after the formation of the web layer (ii) and before the formation of the web layer (iii), thereby being able to easily obtain the nonwoven fabric sheet in which the additive (c) has been laminated between the respective layers.
Further, the nonwoven fabric sheet comprising the web layer (i), the web layer (ii) and the web layer (iii) is further laminated and integrated with the air-permeable sheet (iv) on one side or both sides thereof, thereby improving handling properties of the resulting nonwoven fabric sheet having a cleaning function, and also reinforcing strength.
Furthermore, the nonwoven fabric sheet having a cleaning function of the present invention is integrated by heat treatment such as hot air treatment or calendering treatment with a hot roll, so that interlayer peeling or falling-off of the powder of the additive (c) can be inhibited.
The above-mentioned nonwoven fabric sheet of the present invention is light in weight because of its being in a dry form and free from water to lead to a reduction in cost of distribution and storage, and does not require a fungicide or a bactericide because of no risk of mold.
Further, it contains an alkaline inorganic salt such as baking soda or an organic acid such as citric acid as a cleaning agent and contains no surfactant, so that it is friendly to the human body and the environment, and safe.
Moreover, when the cleaner of the present invention is actually used, baking soda or the organic acid is dissolved in water and not only acts as functions of penetration, separation and dissolution, a reduction function (rust removal) and a function of neutralizing acid dirt or alkali dirt, to dirt stuck to surfaces of domestic instruments and equipments (soap scum or oily scum of baths, wash-basins and the like, water scale (mainly hard white crystals of calcium carbonate and the like), scum of excretory substances in toilets (mainly relatively hard brown crystals composed of calcium phosphate and the like), food scum on kitchen sinks and the like, and the like), but also is expected to have an antibacterial effect and an effect of eliminating acidic bad odors or alkaline bad odors.
In addition, the nonwoven fabric sheet of the present invention is integrated by thermal bonding of the heat-adhesive fibers used, so that it has a high strength in dry and wet states and can be used in heavily dirty spots as described above.

### Best Mode for Carrying Out the Invention

### Web Layer (i) (substrate Sheet)

The web layer (i) used in the present invention is constituted by a nonwoven fabric obtained by the air-laid process, which mainly comprises heat-adhesive fibers having a fineness of 1.5 to 50 dtex and has a basis weight of 10 to 250 g/m². In this substrate sheet, interfiber bonding may be previously performed by heat treatment. Usually, however, it is heat treated together with the above-mentioned web layer (i) and web layer (ii) in a final stage of a process for producing the nonwoven fabric sheet having a cleaning function of the present invention to perform interfiber bonding.

As the heat-adhesive fiber used in the web layer (i) as the substrate sheet, suitable is a heat-adhesive composite fiber. Examples thereof include a sheath-core type in which a low-melting component is used as a sheath component, and a high-melting component is used as a core component, a side-by-side type in which one is a low-melting component, and the other is a high-melting component, and the like. Combinations of both components of these composite fibers include PP (polypropylene)/PE (polyethylene), PET (polyethylene terephthalate)/PE, PP/low-melting copolymerized PP, PET/low-melting copolymerized polyester and the like. Examples of the above-mentioned low-melting copolymerized polyesters as used herein include a modified copolymer of polyethylene terephthalate, polypropylene terephthalate, polybutylene terephthalate or the like as a basic skeleton with an aromatic dicarboxylic acid such as isophthalic acid or 5-metal sulfoisophthalic acid, an aliphatic dicarboxylic acid such as adipic acid or sebacic acid, an aliphatic polyhydric alcohol such as diethylene glycol, propylene glycol or 1,4-butanediol, or the like.

The melting point of the heat-adhesive component as the low-melting component is usually from 110 to 160°C, and preferably from 120 to 155°C. in the case of less than 110°C, heat resistance as a nonwoven fabric is low, which leads to lack of practicality in cleaning in the case of a relatively high temperature such as kitchens, particularly cooking ranges and grills. On the other hand, exceeding 160°C causes necessity to increase the heat treatment temperature in a nonwoven fabric production process, resulting in not only a decrease in productivity, which is unpractical, but also no expectation of an adhesive effect in hot pressing integration with an air-laid fiber layer described later.

The fineness of the heat-adhesive fiber is from 1.5 to 50 dtex, and preferably from 1.7 to 40 dtex. In the case of less than 1.5 dtex, when the web is formed by the air-laid process, fine fibers tend to entangle with one another, and mixing with other fibers becomes difficult, resulting in not only an increase in the risk of the unevenness of texture or massive defects to occur, but also too long a time taken to elute the inorganic salt from the web layer, which leads to lack of practicality. In the case of thick fibers, cleaning and dirt scraping functions increase. On the other hand, in the case of thick fibers exceeding 50 dtex, the number of fibers decreases even at the same mixing ratio, so that the above-mentioned advantages of preventing the inorganic salt powder from falling off, imparting strength, imparting heat sealing properties, and the like recede.
Since the production method of the web layer (i) as the substrate sheet is the air-laid process, the fiber length of the heat-adhesive fiber is preferably from 2 to 15 mm, and more preferably from 3 to 10 mm. When the fiber length is less than 2 mm, the advantage of an increase in strength and the like is insufficient. On the other hand, exceeding 15 mm results in a tendency of the fibers to entangle with one another, being liable to lead to deterioration of processability and texture.

The heat-adhesive fibers may contain various additives. Examples thereof include a colorant, a bactericide, a deodorant, a fungicide, a hydrophilizing agent and the like.

The heat-adhesive fibers may be either crimped or not, or may be strand chops. When crimped, both of a zigzag-shaped two-dimensionally crimped fiber and a spiral-shaped or ohm-shaped three-dimensionally (sterically) crimped fiber can be used.

As a fiber other than these heat-adhesive fibers, there may be mixed, for example, PE (polyethylene) fiber, PP (polypropylene) fiber, PET (polyethylene terephthalate) fiber, PBT (polybutylene terephthalate) fiber, nylon 6 fiber, nylon 66 fiber, aromatic polyamide fiber, acrylic fiber, synthetic pulp (for example, multi-branched fibrillar fiber using PE or PP as a raw material, such as SWP manufactured by Mitsui Chemicals, Inc.), wood pulp, hemp, rayon, viscose fiber or the like, within the range not impairing the spirit and effect of the present invention. In this case, it is preferred that the ratio of the other fiber is confined to less than 30% by weight. Thirty percent or more by weight results in not only an influence on nonwoven fabric strength or heat-sealing properties, but also easy falling-off of fibers having no heat adhesiveness in practical use.

The basis weight of the web layer (i) forming the substrate sheet is from 10 to 250 g/m², and more preferably from 20 to 150 g/m². In the case of less than 10 g/m², the powder of the additive (c) present between the layer (i) and the layer (ii) or in the layer (ii) is not trapped by the web layer (i) to fall off, and the nonwoven fabric strength also decreases, which is liable to cause a trouble such as breakage in practical use. On the other hand, exceeding 250 g/m² results in not only a tendency to fail to secure sufficient air permeability necessary as a substrate of an air-laid process, but also too long a time taken to elute the additive (c) from between the layer (i) and the layer (ii) or the layer (ii), which leads to lack of practicality.
The air permeability of the web layer (i) forming the substrate sheet is preferably 2 seconds or less. The air permeability as used herein is represented by the air permeability using JIS P8117, a Gurley type tester.
The air-laid process is a process of blasting a mixture of fibers and air from above an air-permeable material and forming a fiber layer on the air-permeable material while sucking with a suction from under it, so that the air permeability of the substrate sheet forming a substrate becomes an important requirement. In the case of a poor air permeability exceeding 2 seconds, the air-laid fiber layer tends to become uneven, and productivity also deteriorates. The air permeability is preferably from 0.5 to 2 seconds.

The web layer (i) forming the substrate sheet may be prepared at the same time that it is laminated with the web layer (ii). However, for example, the use of the web layer (i) (substrate sheet) previously prepared by the air-laid process and heat treated can also simplify the production process by the air-laid process.

### Formation of Web Layer (ii) and Lamination Integration

Then, the additive is laminated between the layer (i) and the layer (ii), or the web layer (ii) containing the additive (c) is formed on the web layer (i) forming the above-mentioned substrate sheet, by the air-laid process. That is to say, the additive (c) or a mixture containing at least the additive (c) and the heat-adhesive fibers is blasted from a single blast portion or multiple blast portions positioned over a porous net conveyer to form the web layer on the net conveyer while sucking with an air suction portion arranged under the net conveyer. At this time, the web layer (i) forming the substrate sheet is previously laid on the net conveyor, thereby obtaining a laminated body at once. Then, interfiber bonding of the air-laid layer and heat adhesion thereof to the substrate are formed by hot air treatment and/or hot pressing calendering treatment to achieve integration as a nonwoven fabric sheet.
In this case, when the additive (c) is added to the web layer (ii), advantages of fixing the additive (c) and preventing it from falling off, improving interlayer peeling strength, and the like can be expected, because the heat-adhesive fibers are mixed in combination.

As the heat-adhesive fiber (a), the above-mentioned heat-adhesive composite fiber is particularly suitable. The fineness of the heat-adhesive fiber (a) is from 1 to 4.4 dtex, and preferably from 1 to 3.3 dtex. In the case of less than 1 dtex, when the web is formed by the air-laid process, fine fibers tend to entangle with one another, and mixing with other fibers becomes difficult, resulting in an increase in the risk of the unevenness of texture or massive defects to occur. On the other hand, exceeding 50 dtex results in a decrease in the number of fibers even at the same mixing ratio, so that the advantages of trapping the inorganic salt powder, preventing the powder from falling off, imparting strength, imparting heat sealing properties, and the like recede. The fiber length of the heat-adhesive fiber is similar to that of the heat-adhesive fiber used in the web layer (i).
The mixing ratio of the heat-adhesive fiber (a) in the web layer (ii) is from 20 to 100% by weight, and preferably from 20 to 90% by weight. Less than 20% by weight results in failure to secure the advantages of trapping, fixing and falling-off prevention of the additive (c).

Further, the cellulosic pulp (b) which may be used in the web layer (ii) holds the powder of the additive (c), and bears the role of retain water at the time of cleaning.
The cellulosic pulp (b) includes crushed pulp of nonwoody pulp such as linter pulp and bagasse, as well as wood pulp.
The mixing ratio of the cellulosic pulp (b) in the web layer (ii) is from 0 to 80% by weight, and preferably from 0 to 40% by weight. Exceeding 80% by weight is unfavorably results in a decrease in tensile strength or interlayer peeling strength, particularly in a wet state.

Furthermore, the alkaline inorganic salts (c1) having a cleaning function which may be added to the layer (ii) include an alkali metal carbonate, an alkali metal bicarbonate, an alkali metal borate, an alkali metal phosphate, an alkali metal silicate, an alkali metal oxalate and the like. In particular, anhydrous sodium carbonate, sodium carbonate decahydrate (washing soda), sodium hydrogen carbonate (baking soda), sodium sesquicarbonate, sodium silicate, hydrated lime and the like are preferred.
These inorganic salts are preferably water-soluble, more preferably water-soluble carbonates, and particularly preferably sodium bicarbonate. In particular, baking soda is preferred because it has odor eliminating and deodorizing effects. The term "water-soluble" as used herein means that the solubility at ordinary temperature is 1 g or more per 100 g of water.

The alkaline inorganic salts (c1) have been not only put into practical use as alkaline aids for various household and industrial detergents, but also used with the assistance of detergency of themselves in some cases. For example, baking soda, namely sodium hydrogen carbonate or soda bicarbonate, has been traditionally used as a cleaning agent, and said to contribute to removal of dirt by operations and effects of (1) blocking or precipitating calcium ions or magnesium ions in water or derived from dirt to soften a cleaning liquid, (2) alkalifying a cleaning liquid to saponify or hydrolyze dirt such as fat and oil or a fatty acid, (3) maintaining the pH suitable for cleaning by a buffering function, (4) showing a surface-active function in a dirty liquid, and (5) showing scraping and grinding functions for a powdery one. Further, it also has a deodorizing effect by an inclusion function of malodorous substances and a neutralizing function of acidic substances.
The cleaning principle in water is assumed to be an effect due to neutralization and hydrolysis of organic materials by the alkalescent inorganic salts.

The average particle size of the powders of these alkaline inorganic salts (c1) is usually from 0.01 to 2 mm, and preferably from 0.1 to 1 mm.

An enzyme may be further combined with the powder of the alkaline inorganic salt (c1). The enzymes include degradative enzymes such as protease effective for protein dirt, lipase effective for lipid dirt and amylase effective for starch dirt. However, an alkali-resistant enzyme can also be particularly selected depending on the alkalinity of the alkaline inorganic salt.
Further, inorganic particles as an abrasive, for example, alumina, silica, graphite, zeolite, titanium dioxide, kaolin, clay, silicon carbide, diatomaceous earth, calcium carbonate, calcium phosphate, aluminum oxide or the like can also be used as a mixture with the powder of the alkaline inorganic salt (c1) . However, the abrasive is likely to damage an object, so that it is necessary to limit the amount thereof mixed per unit area to a small amount.

Further, by placing the nonwoven fabric sheet having a cleaning function of the present invention with water in a tray of a cooking grill in a kitchen, it has been revealed that cleaning of an inside thereof after cooking becomes easy, and that it also has an odor reducing function. This is assumed to be due to not only an effect of absorbing oil, meat juice and the like dripped from fish and the like, but also a neutralizing function of the alkaline inorganic salt dissolved out in water.

On the other hand, the powdery organic acid (c2) which may be used in the web layer (ii) is a component which acts as functions of penetration, separation and dissolution, a reduction function (rust removal), a function of neutralizing alkali dirt, an antibacterial function and an odor eliminating function, to dirt stuck to surfaces of domestic instruments and equipments (soap scum or oily scum of baths, wash-basins and the like, water scale (mainly hard white crystals of calcium carbonate and the like), scum of excretory substances in toilets (mainly relatively hard brown crystals composed of calcium phosphate and the like), food scum on kitchen sinks and the like, and the like).
The organic acid (c2) is a hydroxy acid having a hydroxyl group and a melting point of 70°C or higher. The organic acid (c2) has a hydroxyl group in its molecule, thereby being excellent in solubility. This becomes an essential item when the resulting cleaner is wetted with water to use. Further, the melting point of the organic acid (c2) is required to be 70°C or higher. In the case of lower than 70°C, there unfavorably occurs a trouble of fusing to melt out or exude during transportation and storage in some cases.
Specific examples of the organic acids (c2) include malic acid (melting point=99°C) and tartaric acid (melting point=170°C) as a dibasic acid, citric acid (fusion temperature of crystallization water type=about 100°C, melting point of anhydrous type=153°C) as a tribasic acid, gluconolactone, further salts thereof and the like. Particularly preferred is citric acid.
The average particle size of the organic acid (c2) is from 0.1 to 2 mm, and preferably from 0.2 to 1.5 mm. When it is less than 0.1 mm, the organic acid passed through apertures of the web layers (i) and (iii) as front-back layers to come to easily fall off. On the other hand, when it exceeds 2 mm, the organic acid comes to easily fall off from a cut end (cut surface) of the resulting sheet during transportation and storage.

In addition, inorganic particles as an abrasive, for example, alumina, silica, graphite, zeolite, titanium dioxide, kaolin, clay, silicon carbide, diatomaceous earth, calcium carbonate, calcium phosphate, aluminum oxide or the like can also be used as a mixture with the powdery organic acid (c2) . However, the abrasive is likely to damage an object, so that it is necessary to limit the amount thereof mixed per unit area to a small amount.

Further, by placing the nonwoven fabric sheet having a cleaning function of the present invention with water in a tray of a cooking grill in a kitchen, it has been revealed that cleaning of an inside thereof after cooking becomes easy, and that it also has an odor reducing function. This is assumed to be due to not only an effect of absorbing oil, meat juice and the like dripped from fish and the like, but also a neutralizing function of the organic acid of the present invention dissolved out in water.

In the web layer (ii) of the present invention, polyolefinic synthetic pulp (d) may be used as the pulp in combination with the above-mentioned cellulosic pulp (b).
Here, the polyolefinic synthetic pulp (d) is obtained, for example, by discharging a dispersion comprising a polyolefin in a high-temperature, high-pressure state, a solvent for a polymer selected from an aliphatic hydrocarbon and/or an aromatic hydrocarbon having a boiling point lower than that of water, and water, in which all solvents are substantially evaporated when rapidly discharged into a reduced-pressure region, and which is at a temperature at which substantial evaporation of water does not occur, into a reduced-pressure region through a nozzle, recovering the polyolefin as a fibrous material dispersed in water, and beating or refining the fibrous material dispersed in water in a state where a surfactant is mixed. The production method of this polyolefinic synthetic pulp is described in detail, for example, in claims and column 3, line 5 to column 19, line 25 of JP-B-52-47049. However, the method is not necessarily limited thereto, as long as it is within the spirit of the present invention, that is to say, it is a method for producing polyolefinic synthetic pulp comprising fibrillar fibers having a function of trapping a hygroscopic powder. The polyolefinic synthetic pulp having an average fiber length of 0.5 to 3 mm and an average fiber diameter of 1 to 100 µm can be suitably used.
Commercial products of this polyolefinic synthetic pulp include SWP E790, E400, EST-8, E620, UL410, NL490, AU690, Y600, ESS-5, ESS-2, E380, E780, E90, UL415 and the like manufactured by Mitsui Chemicals, Inc.

The polyolefinic synthetic pulp (d) has a multi-branched fibrous structure (fibrillated to have multiple branches and a high specific area), so that it is characterized by excellent trapping performance of the additive (c). Further, when blown on the above-mentioned substrate sheet by the air-laid process, the web layer in which the polyolefinic synthetic pulp (d) and the additive (c) are blended with each other in an air stream is uniformly placed on the sheet.

The mixing ratio (weight ratio) of the polyolefinic synthetic pulp (d) and the additive (c) forming the web layer (ii) is from 1/0.2 to ½, and preferably from 1/0.25 to 1/1-8. When the polyolefinic synthetic pulp (d) is too little, the function of trapping the powder of the additive (c) becomes insufficient, resulting in easy falling-off of the powder. On the other hand, when the powder of the additive (c) is too little, the cleaning effect of the resulting nonwoven fabric sheet is poor, resulting in a sheet not intended in the present invention.

Further, as a fiber other than these fibers, there may be mixed, for example, PP fiber, PET fiber, PBT fiber, nylon 6 fiber, nylon 6,6 fiber, aromatic polyamide fiber, acrylic fiber, hemp, rayon, viscose fiber or the like, within the range not impairing the spirit and effect of the present invention. In this case, it is preferred that the ratio of the other fiber is confined to less than 30% by weight. Thirty percent or more by weight results in not only an influence on nonwoven fabric strength or heat-sealing properties, but also easy falling-off of fibers having no heat adhesiveness in practical use.

The basis weight of the web layer (ii) except for the additive (c) formed by the air-laid process is usually from 10 to 400 g/m2, and preferably from 20 to 300 g/m². In the case of less than 10 g/m², the powder of the additive (c) present between the layer (i) and the layer (ii) or in the layer (ii) is not trapped by the web layer (i) to fall off, and the nonwoven fabric strength also decreases, which is liable to cause a trouble such as breakage in practical use. On the other hand, exceeding 400 g/m² results in not only a tendency to fail to secure sufficient air permeability necessary as a substrate of an air-laid process, but also too long a time taken to elute the additive (c) from between the layer (i) and the layer (ii) or the layer (ii), which leads to lack of practicality.
In the air-laid process for producing the web layer of the present invention, fibers easily dissociated to single fibers by airflow and short in length can be used, compared to an existing dry nonwoven fabric production process such as a card process. Accordingly, the air-laid process has a characteristic that there is obtained a nonwoven fabric having extremely good texture, namely having good uniformity. Moreover, it is possible to form the web at once while mixing the powder, so that this process is suitable for the present invention. In use for the sheet for cleaning, uniformity is an important requirement for performance of being small in powder leakage and large in the cleaning effect, and is hard to be obtained by an existing card process nonwoven fabric, spun bond nonwoven fabric and melt blow nonwoven fabric. Further, according to this production method, the nonwoven fabric also has a merit that the longitudinal/lateral strength ratio is approximately close to 1/1.

### Web Layer (iii) (Upper Layer Sheet)

In the nonwoven fabric sheet having a cleaning function of the present invention, it is preferred that the web layer (iii) having a basis weight of 10 to 250 g/m² produced by an air-laid process, which comprises heat-adhesive fibers having a fineness of 1.5 to 50 dtex as a main component, is further laminated on this web layer (ii), in order to more prevent the powder of the additive (c) present in the above-mentioned web layer from falling off and to enhance functions such as surface strength.
The web layer (iii) forming an upper layer sheet includes a layer similar to the web layer (i) forming the above-mentioned substrate sheet.
A hydrophilic fiber such as wood pulp, linter pulp or rayon may be mixed with the web layer (iii), in order to increase hydrophilicity of a surface thereof to smoothen the cleaning function. The mixing rate is preferably confined to less than 50% by weight. Fifty percent or more by weight results in an increase in falling-off of the hydrophilic fibers or a decrease in wet strength, which leads to lack of practicality.
In order to form a layer of the additive (c) between the layer (ii) and the layer (iii) in forming the web layer (iii), what is necessary is just to previously spray the additive (c) on the web layer (ii) by the air-laid process, and then, to similarly form the web layer (will) by the air-laid process.

In addition to the one in which the powder of the alkaline inorganic salt (c1) or the powdery organic acid (c2) is added into the layer (ii) as described above, the above nonwoven fabric sheet having a cleaning function of the present invention comprising the layer (i)/layer (ii) or the layer (i)/layer (ii) /layer (iii) may be one in which the additive (c) comprising the component (c1) or the component (c2) is added to and laminated between the layer (i) and the layer (ii) or between the layer (ii) and the layer (iii).
The constitution of the additive (c) in the nonwoven fabric sheet of the present invention includes, for example, (1) a type in which the component (c1) is laminated between the layer (i) /layer (ii), and the component (c2) is laminated between the layer (ii) and layer (iii), (2) a type in which the component (c2) is laminated between the layer (i)/layer (ii), and the component (c1) is laminated between the layer (ii) and layer (iii), (3) a type in which the component (c1) is laminated between the layer (i) /layer (ii), the component (c2) is allowed to be contained in the layer (ii), and the component (c1) is laminated between the layer (ii) and layer (iii), and (4) a type in which the component (c2) is laminated between the layer (i)/layer (ii), the component (c1) is allowed to be contained in the layer (ii), and the component (c2) is laminated between the layer (ii) and layer (iii), and the like, as well as the type in which the component (c1) or (c2) is allowed to be contained in only the layer (ii).
The mixed use of the component (c1) and the component (c2) causes neutralization reaction of the component (c1) and the component (c2), resulting in a fear that an active ingredient of each component becomes ineffective. Accordingly, the mixed use is unfavorable.

When the component (c) is laminated between the layer (i)/layer (ii) or between the layer (ii)/layer (iii), the heat-adhesive fiber (a), the cellulosic pulp (b) or the polyolefinic pulp (d) used in the present invention, the other fibers or the like can also be mixed in an amount of 50% by weight or less, preferably 30% by weight or less, with the component (c) to use.

The basis weight of the additive (c) between the layer (i)/layer (ii), in the layer (ii) or between the layer (ii)/layer (iii) described above is from 5 to 300 g/m², and preferably from 10 to 200 g/m². When the basis weight of the additive (c) is less than 5 g/m², the cleaning effect is poor. On the other hand, exceeding 300 g/m² results in difficulty to secure strength as the web layer (ii) or an increase in falling-off of the powder during production, storage and transportation, which lead to lack of practicality
The basis weight of the additive (c) in the whole nonwoven fabric sheet of the present invention is usually from 5 to 500 g/m², and preferably from 10 to 300 g/m².

The total basis weight of the nonwoven fabric sheet containing the additive (c) of the present invention comprising (i) / (ii) or (i) / (ii) / (iii) described above is from 40 to 1,500 g/m², and preferably from 60 to 1,000 g/m². Less than 40 g/m² results in a poor cleaning effect and low strength so that it is difficult to be put to practical use. On the other hand, in the case of a high basis weight exceeding 1,500 g/m², the cleaning effect seldom proportionally increases, and the production cost increases, which leads to lack of merchantability.

### Air-Permeable Sheet (iv)

The nonwoven fabric sheet of the present invention may be integrated with another sheet, as long as it does not impair the intension of the present invention. For example, when integrated with the air-permeable sheet, the air-permeable sheet is placed on a net conveyer, and the fibers are accumulated thereon, in producing the nonwoven fabric sheet of the present invention, thereby being able to easily form a composite sheet. Further, the sheets used for integration include a dry nonwoven fabric, a wet nonwoven fabric, paper, a spunbond nonwoven fabric, a melt-blown nonwoven fabric, a plastic net, a perforated film, a split yarn cloth, woven and knitted fabrics of loose texture, a cheese cloth and the like. However, a sheet formed of a heat-adhesive and water-resistant material is preferred, and one having larger air permeability is preferred.
The basis weight of the air-permeable sheet (iv) is usually from 10 to 200 g/m², and preferably from 10 to 100 g/m².
When the air-permeable sheet (iv) is a nonwoven fabric, the fineness of fibers forming this nonwoven fabric is usually from 1 to 11 dtex, and preferably from 1.5 to 6.6 dtex.
By laminating the air-permeable sheet (iv) on one side or both sides of the nonwoven fabric sheet of the present invention, handling properties are improved, and the strength of the resulting nonwoven fabric sheet can be reinforced.

### Heat Treatment

In the nonwoven fabric sheet having a cleaning function of the present invention, it is preferred that the nonwoven fabric laminated body obtained as described above is heat treated. The heat treatment includes hot air treatment and/or hot pressing treatment.
Of these, as for the hot air treatment for forming interfiber bonds, there is necessary a temperature equal to or higher than the melting point of the low-melting component of the heat-adhesive composite fiber. However, when the temperature is at least 30°C higher than the melting point of the low-melting component, or equal to or higher than the melting point of the high-melting component (the core component of the sheath-core type composite fiber or the high-melting component of the side-by-side type composite fiber), thermal shrinkage of the fiber is liable to become large, which causes deterioration of texture, and deterioration of the fiber in an extreme case. This is therefore unfavorable.
The hot air treatment temperature is usually from 110 to 190°C, and preferably from 120 to 175°C.

Further, after the hot air treatment has been conducted, the hot pressing treatment, specifically hot pressing calendering treatment, may be applied. As rollers used for the calendering treatment, a pair of metal rollers having a smooth surface or a combination of a metal roller and an elastic roller is preferably used, in order to apply uniform hot pressing over all. However, multistage rollers may be used. Furthermore, embossed rollers having an uneven surface may also be used within the range not impairing the spirit of the present invention.

In the case of the calendering treatment, pressurization is performed at any temperature ranging from ordinary temperature (not heated) to high temperature, when it is only for thickness adjustment. The pressure can be appropriately adjusted so as to give a desired thickness. In order to improve strength, surface wear resistance, interlayer peeling prevention and the like by reinforcing interfiber thermal bonding by a hot pressing calender, the temperature of a roller surface is required to be a temperature equal to or higher than the melting point of the low-melting component of the heat-adhesive composite fiber. However, when it is at least 30°C higher than the melting point of the low-melting component, or equal to or higher than the melting point of the high-melting component (the core component of the sheath-core type composite fiber or the high-melting component of the side-by-side type composite fiber), not only thermal shrinkage of the fiber is liable to become large, but also adhesion to the roller surface occurs, resulting in lack of processability. In the case of less than the melting point, the reinforcement of interfiber bonding becomes insufficient, as a matter of course.
The heat treatment temperature in the case of reinforcing interfiber bonding is usually from 110 to 190°C, and preferably from 120 to 175°C.

Further, as the line pressure of the calendering treatment, any pressure can be selected, as long as it is set so that a uniform line pressure is obtained in the width direction. In the case of high pressure, the density, nonwoven fabric strength and interlayer strength increase, and the thickness decrease. In the case of low pressure, the influence contrary thereto is of course exerted. When importance is attached to the nonwoven fabric strength, a pressure as high as possible is preferred. When importance is attached to flexibility, a lower pressure is preferred. Usually, the line pressure of the calendering treatment can be arbitrarily selected within the range of 10 to 100 kgf/cm. Further, any clearance may be provided between the pair of rollers.

In addition, the thickness of the resulting nonwoven fabric sheet having a cleaning function of the present invention is usually from 0.3 to 30 mm, and preferably from 0.5 to 20 mm. However, it can be set depending on the basis weight (40 to 1,500 g/m²) of the web layer and its use.
Further, the total basis weight of the nonwoven fabric sheet having a cleaning function of the present invention including the air-permeable sheet is usually from 40 to 1,800 g/m², and preferably from 50 to 1,500 g/m².

### Examples

The present invention will be described in more detail with reference to the following examples, but should not be construed as being limited thereto.

### Example 1

As a web layer (substrate sheet) (i), PP (polypropylene)/PE (polyethylene)-based composite fibers (11 dtex x 5 mm, manufactured by Chisso Corporation) were formed on a net by the air-laid process so as to become 20 g/m². Then, PP (polypropylene) /PE (polyethylene)-based composite fibers (1.7 dtex x 5 mm, manufactured by Chisso Corporation), a crushed product of wood pulp (NB416 manufactured by Weyerhaeuser Co., Ltd.) and baking soda (manufactured by Tokuyama Corp.) were mixed so as to become 17.5 g/m², 17.5 g/m² and 100 g/m², respectively, and a web layer (ii) totaling 135 g/m² was formed on the above-mentioned web layer (i) by the air-laid process. Further, PP/PE-based composite fibers (1.7 dtex × 5 mm) and wood pulp were mixed so as to become 25 g/m² and 10 g/m², respectively, and a web layer (iii) totaling 35 g/m² was formed thereon by the air-laid process. The air-laid web of 190 g/m² as a whole was heated in a hot air suction heating furnace of 140°C to integrate it. The resulting nonwoven fabric having a thickness of 4 mm was wetted with water to use for cleaning of a domestic bath. As a result, slime and dirt of an inside thereof could be cleaned up without any synthetic detergent. An 11-dtex thick-fineness face of the web layer (i) was used for tough dirt, and a face of the web layer (iii) containing hydrophilic fibers was used for dirt such as slime. This was useful as a bath cleaning sheet. Falling-off of the powder of baking soda contained was extremely little in handling such as storage and transportation.

### Example 2

As a web layer (substrate sheet) (i), PP/PE-based composite fibers (20 dtex × 5 mm, manufactured by Chisso Corporation) were formed on a net by the air-laid process so as to become 100 g/m². Then, PP/PE-based composite fibers (1.7 dtex x 5 mm), wood pulp, synthetic pulp (SWP-E790 manufactured by Mitsui Chemicals, Inc.) and baking soda were mixed so as to become 75 g/m², 75 g/m², 40 g/m² and 150 g/m², respectively, and a web layer (ii) totaling 340 g/m² was formed on the above-mentioned web layer (i) by the air-laid process. Further, PP/PE-based composite fibers (11 dtex x 5 mm) were formed thereon by the air-laid process as a web layer (iii) so as to become 80 g/m². The air-iaid web of 520 g/m² as a whole was heated in a hot air suction heating furnace of 140°C to integrate it. The resulting nonwoven fabric having a thickness of 6.3 mm was wetted with water to use for cleaning of a cooking range. As a result, dirt could be cleaned up. A 20-dtex thick-fineness face of the web layer (i) was particularly effective for tough dirt. Falling-off of the powder of baking soda contained was scarcely observed in handling such as storage and transportation.

### Example 3

A web of PP/PE-based composite fibers (3.3 dtex x 5 mm, manufactured by Chisso Corporation) was formed by the card process, and heat integrated in a hot air suction heating furnace of 136°C to obtain a thermal bond type dry nonwoven fabric having a basis weight of 15 g/m². This dry nonwoven fabric was placed on a net conveyer, and PET (polyethylene tezephthalate) /PE-based composite fibers (2.2 dtex x 5 mm, manufactured by Teij in Fiber Co., Ltd.) were formed thereon by the air-laid process as a web layer (substrate sheet) (i) so as to become 10 g/m². Then, PP/PE-based composite fibers (1.7 dtex × 5 mm), wood pulp and baking soda were mixed so as to become 30 g/m², 5 g/m² and 30 g/m², respectively, and a web layer (ii) totaling 65 g/m² was formed on the above-mentioned web layer (i) by the air-laid process. Further, PP/PE-based composite fibers (2.2 dtex x 5 mm) were formed thereon by the air-laid process as a web layer (iii) so as to become 10 g/m². The composite air-laid web of 100 g/m² as a whole was heated in a hot air suction heating furnace of 140°C to integrate it. The resulting nonwoven fabric having a thickness of 2.5 mm was wetted with water to use for cleaning of an inside of a fish grill of a cooking range. As a result, it was useful for cleaning of oil dirt, burnt deposit and the like. In particular, the thermal bond type dry nonwoven fabric was compounded, so that it was excellent in strength. Accordingly, even when caught by a net of the grill, it was difficult to break, and there was no hindrance for operation. Further, in cooking, water is usually placed in a tray of the grill. It was revealed that cleaning after cooking became easier by previously floating the nonwoven fabric sheet of the present invention on water. This is assumed to be due to an effect of absorbing oil, meat juice and the like dripped from fish and the like, and a neutralizing function of baking soda dissolved out in water.
The above results are shown in Table 1.

**[Table 1]**

| Item | | | Example 1 | Example 2 | Example 3 |
|---|---|---|---|---|---|
| Nonwoven Fabric Production Method | | | Air-Laid Process | Air-Laid Process | Air-Laid Process |
| Raw Material Constitution | Web Layer (Substrate Sheet) (i) | Heat-Adhesive Composite Fiber A | PP/PE 11dtex × 5mm | PP/PE 20dtex × 5mm | PET/PE 2.2dtex × 5mm |
| | | Basis Weight (g/cm²) | 20 | 100 | 10 |
| | Web Layer (ii) | Heat-Adhesive Composite Fiber B | PP/PE 1.7dtex × 5mm | PP/PE 1.7dtex × 5mm | PP/PE 1.7dtex × 5mm |
| | | Cellulosic Pulp C | Wood Pulp | Wood Pulp | Wood Pulp |
| | | Synthetic Pulp D | - | SWP | - |
| | | Alkaline inorganic Salt E | Baking Soda | Baking Soda | Baking Soda |
| | | Mixture Basis Weight (g/cm²) | B/C/E= 17.5/17.5/100 =135 | B/C/D/E= 75/75/40/150 =340 | B/C/E= 30/5/30 =65 |
| | Web Layer (Upper Layer Sheet) (iii) | Heat-Adhesive Composite Fiber F | PP/PE 1.7dtex × 5mm | PP/PE 11dtex × 5mm | PET/PE 2.2dtex × 5mm |
| | | Hydrophilic Fiber G | Wood Pulp | - | - |
| | | Basis Weight (g/cm²) | F/G=25/10=35 | 80 | 10 |
| | Air-Permeable Sheet | | | | Thermal Bond Nonwoven Fabric (PP/PE·3.3 dtex × 5 mm) - |
| Heat Treatment | | | Hot Air 140°C | Hot Air 140°C | Hot Air 140°C |
| Total Basis Weight (g/m²) | | | 190 | 520 | 100 |
| Thickness (mm) | | | 4 | 6.3 | 2.5 |

### Example 4

A nonwoven fabric was prepared in the same manner as in Example 1 with the exception that 100 g/m² of baking soda was removed from the web layer (ii) in Example 1 and that baking soda was sprayed between the layer (i) and the layer (ii) so as to become 100 g/m². However, as the composite fibers of the layer (i), there were used PP/PE-based composite fibers (manufactured by Chisso Corporation, 20 dtex x 5 mm). The resulting nonwoven fabric had a total basis weight of 190 g/m² and a thickness of 5.6 mm. This nonwoven fabric was wetted with water, and a kitchen sink was cleaned with a surface of the layer (i). As a result, cooking dirt could be cleaned up.

### Example 5

As a web layer (substrate sheet) (i), PET/PE-based heat-adhesive sheath-core type composite fibers (manufactured by Teijin Fiber Co., Ltd., 2.2 dtex x 5 mm) and crushed wood pulp were mixed at ratios of 69% by weight (45 g/m²) and 31% by weight (20 g/m²), respectively, and formed on a net by the air-laid process so as to become 65 g/m². Then, PP/PE-based heat-adhesive sheath-core type composite fibers (manufactured by Chisso Corporation, 1.7 dtex x 5 mm), a crushed wood pulp and purified citric acid-crystal type (manufactured by Fuso Chemical Co., Ltd.,) as powdery citric acid were mixed so as to become 45% by weight (175 g/m²), 45% by weight (175 g/m²) and 10% by weight (40 g/m²), respectively, and a web layer (ii) totaling 390 g/m² was formed on the above-mentioned web layer (i) by the air-laid process. Further, PP/PE-based heat-adhesive sheath-core composite fibers (manufactured by Chisso Corporation, 9 dtex × 5 mm) were formed thereon by the air-laid process as a web layer (iii) so as to become 120 g/m². The air-laid web of 575 g/m² as a whole was heated in a hot air suction heating furnace of 138°C to integrate it. The resulting nonwoven fabric having a thickness of 9 mm was wetted with water to use for cleaning of a domestic bath. As a result, dirt such as grime, soap scum and slime of an inside thereof could be cleaned up without any synthetic detergent. This was useful as a bath cleaning sheet. Falling-off of the powdery organic acid contained was extremely little in handling such as storage and transportation.

### Example 6

A web of PP/PE-based heat-adhesive sheath-core type composite fibers (manufactured by Chisso Corporation, 3.3 dtex x 51 mm) was formed by the card process, and hot pressed by a pair of metal (127°C)/cotton calender rolls to perform heat integration, thereby obtaining a thermal bond type dry nonwoven fabric having a basis weight of 30 g/m². This dry nonwoven fabric was placed as an air-permeable sheet (iv) on a net conveyer, and PP/PE-based heat-adhesive sheath-core type composite fibers (manufactured by Chisso Corporation, 1.7 dtex x 5 mm) was formed thereon by the air-laid process as a web layer (i) so as to become 20 g/m². Then, PP/PE-based heat-adhesive sheath-core type composite fibers (manufactured by Chisso Corporation, 1.7 dtex x 5 mm), crushed wood pulp and the same powdery organic acid as in Example 1 were mixed so as to become 50% by weight (230 g/m²), 30% by weight (140 g/m²) and 20% by weight (90 g/m²), respectively, and a web layer (ii) totaling 460 g/m² was formed on the above-mentioned web layer (i) by the air-laid process. Further, PP/PE-based heat-adhesive sheath-core type composite fibers (manufactured by Chisso Corporation, 20 dtex x 5 mm) were formed thereon by the air-laid process as a web layer (surface layer) (iii) so as to become 150 g/m². The composite air-laid web of 660 g/m² as a whole was heated in a hot air suction heating furnace of 139°C to integrate it. The resulting nonwoven fabric having a thickness of 11 mm was wetted with water to use for cleaning of an inside of a fish grill of a cooking range. As a result, it was useful for cleaning of oil dirt, burnt deposit and the like. In particular, the thermal bond type dry nonwoven fabric was compounded, so that it was excellent in strength. Accordingly, even when caught by a net of the grill, it was difficult to break, and there was no hindrance for operation. Further, in cooking, water is usually placed in a tray of the grill. It was revealed that cleaning after cooking became easier by previously floating the nonwoven fabric sheet of the present invention on water. This is assumed to be due to an effect of absorbing oil, meat juice and the like dripped from fish and the like, and a neutralizing function of the organic acid dissolved out in water.
Falling-off of the powdery organic acid contained was extremely little in handling such as storage and transportation.

### Example 7

As a web layer (substrate sheet) (i), PP/PE-based heat-adhesive sheath-core type composite fibers (manufactured by Chisso Corporation, 11 dtex x 5 mm) were formed on a net by the air-laid process so as to become 50 g/m². Then, PET/PE-based heat-adhesive sheath-core type composite fibers (manufactured by Teijin Fiber Co., Ltd., 2.2 dtex × 5 mm), crushed wood pulp and the same powdery organic acid as in Example 1 were mixed so as to become 35% by weight (60 g/m²), 41% by weight (70 g/m²) and 24% by weight (40 g/m²), respectively, and a web layer (ii) totaling 170 g/m² was formed on the above-mentioned web layer (i) by the air-laid process. Further, PP/PE-based heat-adhesive sheath-core type composite fibers (manufactured by Chisso Corporation, 11 dtex x 5 mm) were formed thereon by the air-laid process as a web layer (iii) so as to become 70 g/m². The air-laid web of 290 g/m² as a whole was heated in a hot air suction heating furnace of 137°C to integrate it. The resulting nonwoven fabric having a thickness of 6 mm was wetted with water to use for cleaning of a wash-basin. As a result, soap scum and toothpaste scum could be cleaned up.
Falling-off of the powdery organic acid contained was extremely little in handling such as storage and transportation.

### Example 8

A web of PET/PE-based heat-adhesive sheath-core type composite fibers (2.2 dtex x 51 mm, manufactured by Teijin Fiber Co., Ltd.) was formed by the card process, and heat integrated in a hot air suction heating furnace of 136°C to obtain a thermal bond type dry nonwoven fabric having a basis weight of 15 g/m². This dry nonwoven fabric was placed on a net conveyer, and PET/PE-based composite fibers (2.2 dtex x 5 mm, manufactured by Teij in Fiber Co., Ltd.) were formed thereon by the air-laid process as a web layer (substrate sheet) (i) so as to become 10 g/m². Then, purified citric acid-anhydrous type (manufactured by Fuso Chemical Co., Ltd.,) was sprayed thereon as powdery citric acid so as to become 40 g/m². Then, PP/PE-based composite fibers (1.7 dtex x 5 mm) and wood pulp were mixed so as to become 75 g/m² and 300 g/m², respectively, and a web layer (ii) totaling 375 g/m² was formed on the abovementioned sprayed citric acid by the air-laid process. Further, 120 g/m² of baking soda was sprayed thereon, and furthermore, PET/copolymer PET-based composite fibers (22 dtex x 5 mm, manufactured by Teijin Fiber Co., Ltd. C2 type) was formed thereon as a web layer (iii) by the air-laid process so as to become 75 g/m². The composite air-laid web of 635 g/m² as a whole was heated in a hot air suction heating furnace of 140°C to integrate it. The resulting composite nonwoven fabric having a thickness of 8 mm was wetted with water to use for cleaning of cooking dirt in a kitchen. It was useful for cleaning of oil dirt, cooking liquid dirt, detergent dirt, burnt deposit and the like.

### Comparative Example 1

As a web layer (substrate sheet) (i), the same fibers (11 dtex x 5 mm) as in Example 3 were formed on a net by the air-laid process so as to become 50 g/m² . Then, PET/PE-based heat-adhesive sheath-core type composite fibers (manufactured by Teijin Fiber Co., Ltd., 2.2 dtex x 5 mm) and crushed wood pulp were mixed so as to become 50% by weight (80 g/m²) and 50% by weight (80g/m²), respectively, and a web layer (ii) totaling 160 g/m² was formed on the above-mentioned web layer (i) by the air-laid process. Further, the same fibers (11 dtex x 5 mm) as in Example 3 were formed thereon by the air-laid process as a web layer (iii) so as to become 70 g/m². The air-laid web of 280 g/m² as a whole was heated in a hot air suction heating furnace of 137°C to integrate it. The resulting nonwoven fabric having a thickness of 6 mm contained no organic acid, so that when wetted with water and used for cleaning of a wash-basin, soap scum and toothpaste scum remained on a surface of the wash-basin in streak form, resulting in failure to obtain a sufficient cleaning.

### Industrial Applicability

The nonwoven fabric sheet for cleaning of the present invention is produced by combining the additive (c) comprising the alkaline inorganic salt (c1) having a cleaning function or the powdery organic acid (c2) having a cleaning function with the heat-adhesive fibers, and using the air-laid process. It is therefore a nonwoven fabric sheet for cleaning decreased in falling-off of the powder of the additive (c), rich in flexibility and applicable to various applications. Moreover, no synthetic surfactant is contained, so that it is said to be a cleaning sheet friendly to human and environment. Accordingly, the nonwoven fabric sheet for cleaning of the present invention is useful as a cleaning sheet in wide fields such as industrial application, as well as for cleaning of household instruments such as kitchens, floors of bathrooms and toilets, further, sinks, cooking ranges, grills and toilet instruments.

## Claims

1. A nonwoven fabric sheet having a cleaning function having a total basis weight of 40 to 1,500 g/m² in which a web layer (ii) having a basis weight of 10 to 400 g/m² produced by an air-laid process, which comprises 20 to 100% by weight of heat-adhesive fibers (a) having a fineness of 1 to 4.4 dtex and 80 to 0% by weight of cellulosic pulp (b) (with the proviso that (a)+ jb)=100% by weight) as main components, is laminated on a web layer (i) having a basis weight of 10 to 250 g/m² produced by an air-laid process, which comprises heat-adhesive fibers having a fineness of 1.5 to 50 dtex as a main component; the same web layer (iii) as the above web layer (i) is further laminated on the web layer (ii) as needed to form an integrated sheet as a whole by thermal bonding of these heat-adhesive fibers; and an additive (c) comprising an alkaline inorganic salt powder (c1) having a cleaning function or a hydroxyl group-containing powdery organic acid (c2) having a melting point of 70 °C or higher is contained in an amount of 5 to 300 g/m² to at least one portion of between the layer (i) and the layer (ii), inside of the layer (ii), and between the layer (ii) and the layer (iii).

2. The nonwoven fabric sheet having a cleaning function according to claim 1, wherein the alkaline inorganic salt (c1) having a cleaning function is a water-soluble carbonate.

3. The nonwoven fabric sheet for cleaning according to claim 1, wherein the hydroxyl group-containing powdery organic acid (c2) having a melting point of 70 °C or higher is at least one selected from the group consisting of malic acid, citric acid, tartaric acid, gluconolactone and a salt thereof.

4. The nonwoven fabric sheet having a cleaning function according to claim 1, wherein polyolefinic synthetic pulp (d) having a multi-branched fibrous structure obtained by a flush process is allowed to be contained in the web layer (ii) so that the additive (c)/the polyolefinic synthetic pulp (d) (weight ratio) is from 1/0.2 to 1/2.

5. The nonwoven fabric sheet having a cleaning function according to any one of claims 1 to 4, wherein the nonwoven fabric sheet is further laminated and integrated with an pair-permeable sheet (iv) on one side or both sides thereof.

6. The nonwoven fabric sheet having a cleaning function according to claim 5, wherein the air-permeable sheets (iv) is a dry nonwoven fabric, a wet nonwoven fabric, paper, a spunbond nonwoven fabric, a melt-blown nonwoven fabric, a plastic net, a perforated film, a split yarn cloth, a woven or knitted fabric or a cheesecloth.
